# EUROPÄISCHE PATENTSCHRIFT

(11) **EP 3 745 009 B1**
(45) Veröffentlichungstag und Bekanntmachung des Hinweises auf die Patenterteilung: **05.07.2023**
(21) Anmeldenummer: 19177295.3
(22) Anmeldetag: 29.05.2019
(51) Int. Cl.: F16K 31/04, F16K 37/00, F16K 7/12, G05B 19/19

(54) **INBETRIEBNAHME EINES MEMBRANVENTILS**
COMMISSIONING OF A DIAPHRAGM VALVE
MISE EN SERVICE D'UNE SOUPAPE À MEMBRANE

(43) Veröffentlichungstag der Anmeldung: 02.12.2020
(73) Patentinhaber: Georg Fischer Rohrleitungssysteme AG, 8201 Schaffhausen (CH)
(72) Erfinder: Schwarz, Manuel, 78467 Konstanz (DE); Lalevic, Novica, 8180 Bülach (CH)
(74) Vertreter: Fenner, Seraina

(56) Entgegenhaltungen:
- DE-A1-102015 210 208
- DE-A1-102017 128 542
- JP-A- H0 539 885
- JP-A- 2017 194 142

## Beschreibung

Die Erfindung betrifft ein Verfahren zum Bestimmen der Endlagepositionen einer Membrane in einem Membranventil mit Antrieb.

Aus dem Stand der Technik sind Membranventile mit Stellantrieben bekannt bei denen die Membrane einen vordefinierten Hub durchführt. Das heisst auch, dass das Membranventil eine vorgegebene Offenstellung aufweist in der die Membrane in einer oberen Endlageposition auf einen mechanischen Endanschlag fährt sowie für ein geschlossenes Membranventil der Stellantrieb ebenfalls auf einen mechanischen Endanschlag oder so tief hinunter wie möglich fährt. Durch die manuelle Montage, Produktionstoleranzen und Einstellung der mechanischen Endanschläge können die Positionen variieren und die Endlagen der Membrane sind nicht genau auf die mechanischen Endanschläge abstimmbar wodurch die Membrane höher beansprucht wird da höhere Kräfte auf sie wirken und dadurch schneller verschlissen ist.

In der EP 2 118 539 B1 wird eine Membrane für eine prozessgesteuerte Vorrichtung offenbart, wobei die Membrane einen auf Druck ansprechenden Bereich aufweist wodurch der ausgeübte Druck entsprechend angepasst werden kann.

Nachteilig hierbei ist, dass die Membrane durch den druckansprechenden Bereich teuer in der Herstellung ist und zudem noch zusätzliche Sensoren benötigt die ebenfalls angeschlossen werden müssen. JP2017194142 offenbart ein Verfahren zum Bestimmen der Endlagepositionen eines Schliesselements eines Ventils. JPH0539885 offenbart ein Verfahren zum Bestimmen der Endlagepositionen einer Membrane in einem Membranventil.

Es ist Aufgabe der Erfindung ein Verfahren vorzuschlagen, bei dem das Ventil geschont und die Lebensdauer erhöht wird, wie auch Toleranzen kompensiert werden können. Zudem sollen auch Unregelmässigkeiten im Betrieb festgestellt werden können.

Diese Aufgabe wird erfindungsgemäss dadurch gelöst, dass das Verfahren zum Bestimmen der Endlagepositionen einer Membrane in einem Membranventil folgende Schritte aufweist:
- Auslösen der Membranverschiebung, wobei die Membrane vorzugsweise über einen Antrieb, speziell bevorzugt über einen Stellantrieb, angetrieben wird, in eine erste Endlageposition,
- Festlegen der ersten Endlageposition der Membrane, wobei die Festlegung der ersten Endlageposition mittels einer Antriebsstromwertüberwachung erfolgt, wobei die erste Endlagenposition beim Erreichen eines für den Stellantrieb vordefinierten Stromwerts erreicht ist,
- Speichern der ersten Endlageposition,
- Autonomes Anfahren einer zweiten Endlageposition der Membrane vorzugsweise in die entgegengesetzte Richtung,
- Festlegen der zweiten Endlageposition der Membrane, wobei die Festlegung der zweiten Endlageposition durch einen vordefinierten Verfahrweg bzw. Distanz der Membrane ausgehend der ersten Endlageposition erfolgt,
- Speichern der zweiten Endlageposition,
- Vorzugsweise Ermitteln des Antriebsstromwerts an der zweiten Endlageposition zur Überprüfung und Sicherstellung der erreichten zweiten Endlageposition während des Normalbetriebs.

Wie auch diese Aufgabe dadurch gelöst wird, dass das Verfahren zum Bestimmen der Endlagepositionen einer Membrane in einem Membranventil mit einem Antriebantrieb folgende Schritte aufweist:
- Auslösen der Membranverschiebung in eine erste Endlageposition,
- Festlegen der ersten Endlageposition der Membrane, wobei die Festlegung der ersten Endlageposition mittels einer Antriebsstromwertüberwachung erfolgt, wobei die erste Endlagenposition bei einem für den Stellantrieb vordefinierten Stromwert erreicht ist,
- Speichern der ersten Endlageposition,
- Autonomes Anfahren einer zweiten Endlageposition der Membrane vorzugsweise in die entgegengesetzte Richtung,
- Festlegen einer Vorendlageposition der Membrane, wobei die Festlegung der Vorendlageposition mittels einer Antriebsstromwertüberwachung erfolgt, wobei die Vorendlageposition beim Erreichen eines für den Antrieb vordefinierten Stromwert erreicht ist,
- Erreichen und Festlegen der zweiten Endlageposition durch weiteres Zustellen eines vordefinierten Verstellwegs der Membrane.

Das erfindungsgemässe Verfahren zum Bestimmen der Endlageposition einer Membrane in einem Membranventil kann manuell, vorzugsweise durch die Betätigung einer Taste oder auch automatisch ausgelöst werden. Durch das Auslösen bewegt sich die Membrane in Richtung der festzulegenden ersten Endlageposition. Die erste Endlageposition der Membrane definiert vorzugsweise den maximalen Öffnungszustand des Membranventils. Die Festlegung der ersten Endlageposition erfolgt mittels einer Antriebsstromüberwachung. Das heisst, die Membrane bewegt sich in Richtung Endlageposition währenddessen der Antriebsstrom überwacht wird. Solange kein Widerstand auftritt bleibt der Antriebsstrom mehr oder weniger konstant, hier als Laufstrom bezeichnet. Erhöht sich der Antiebsstromwert bis zu einem vordefinierten bzw. voreingestellten Stromwert hat die Membrane die erste Endlageposition erreicht.

Die Erhöhung des Antriebsstroms zur Bestimmung der ersten Endlage wird vorzugsweise dadurch ausgelöst, dass ein mechanischer Widerstand bzw. Anschlag die Membrane begrenzt, wodurch der Stellantrieb eine höhere Kraft und dadurch einen höheren Antriebsstrom aufwendet. Dadurch wird erkannt, dass es sich um die erreichte erste Endlageposition handelt, welche dann in der Firmware bzw. Software als erste Endlageposition abgespeichert wird.

Nach dem Erreichen und Festlegen der ersten Endlageposition fährt die Membrane autonom zur festzulegenden zweite Endlageposition an, wobei die zweite Endlageposition vorzugsweise in der entgegengesetzten Bewegungsrichtung angeordnet ist und vorzugsweise die Schliessposition des Membranventils bildet.

Das erfindungsgemässe Verfahren weist zwei Möglichkeiten auf die zweite Endlageposition festzulegen. Die eine Möglichkeit besteht darin, dass die Membrane sich ausgehend von der ersten Endlageposition über einen vorgegebenen bzw. vordefinierten Verfahrweg bzw. Distanz bewegt bzw. absenkt und diese Position als zweite Endlageposition gespeichert wird. Der an dieser Position ermittelte Antriebsstrom wird als Kontrollwert genutzt.

Dieser kann während nach der Inbetriebnahme des Membranventils wie aber auch nach der Inbetriebnahme des Membranventils im Normalbetrieb dem Überprüfen und Sicherstellen der zweiten Endlageposition dienen. Nimmt jedoch der Antriebsstrom an der zweiten Endlageposition beispielsweise ab wird das von der Software erkannt und beispielsweise eine Fehlermeldung ausgegeben, dass das Membranventil nicht mehr richtig schliesst oder es justiert sich autonom.

Die zweite Möglichkeit, die zweite Endlageposition festzulegen besteht darin, dass über ein vordefinierten bzw. vorgegebenen Stromwert eine Vorendlageposition der Membrane ermittelt und festgelegt wird. Ausgehend von der Vorendlagenposition wird dann noch ein vordefinierter bzw. vorgegebener Verstellweg zugestellt wodurch die zweite Endlagenposition erreicht ist und gespeichert wird.

Der vordefinierte Stromwert für die Vorendlageposition kann einerseits als reiner Stromwert vordefiniert und hinterlegt werden oder aber kann auch von einer Firmware oder Steuerung mittels einer hinterlegten Berechnung ermittelt werden, welcher dann auch als vordefinierter bzw. vorgegebener Stromwert angesehen wird. Vorzugsweise wird der vorgegebene Stromwert der Vorendlageposition in Abhängigkeit des überwachten Laufstroms kalkuliert. Es ist vorteilhaft wenn der vorgegeben Stromwert der Vorendlageposition 5 - 20%, speziell bevorzugt 8 - 12 % über dem ermittelten und überwachten durchschnittlichen Laufstrom liegt.

Vorzugsweise verändert sich der Antriebsstromwert zum Ermitteln und Festlegen der ersten Endlageposition der Membrane aufgrund eines mechanischen Widerstands, wobei der Antriebsstromwert bis zu einem vorgegebenen maximalen Stromwert ansteigt. Wie bereits erwähnt wird zum Festlegen der ersten Endlageposition der Antriebsstrom des Stellantriebs überwacht und beim Erreichen eines vorgegebenen Stromwerts wird festgestellt, dass die Membrane die erste Endlageposition erreicht hat, aufgrund des mechanischen Anschlags, der dem Stellantrieb einen höheren Strom abverlangt sobald die Membrane am Anschlag ansteht.

Als vorteilhaft hat sich gezeigt, wenn als vordefinierter bzw. vorgegebener Stromwert für die Vorendlageposition ein Stromwert von 5 - 20% oberhalb des Laufstroms gewählt wird, speziell bevorzugt 8 - 12 %, wobei dieser autonom vom System aufgrund des überwachten Laufstroms kalkuliert werden kann, wie auch als fester Wert dem System hinterlegt werden kann.

Es ist vorteilhaft, wenn die erste Endlageposition der Membrane den maximalen Öffnungszustand des Membranventils definiert.

Als bevorzugte Ausführungsform hat sich gezeigt, wenn die zweite Endlageposition der Membrane den geschlossenen Zustand des Membranventils bildet.

Selbstverständlich können die erste und zweite Endlageposition auch umgekehrt angefahren werden für die Inbetriebnahme des Membranventils und somit anders bezeichnet werden.

Durch die Festlegung der beiden Maximalpositionen kann der Hub der Membrane während des Betriebs zwischen den beiden Positionen individuell gesteuert werden.

Als vorteilhaft hat sich gezeigt, wenn sich während des Verfahrwegs der Membrane, während dessen kein zusätzlicher Widerstand auftritt, zwischen der ersten Endlageposition und der zweiten Endlageposition bzw. der Vorendlageposition ein Laufstrom einstellt, wobei der Laufstrom einen vorgegeben Stromwert nicht überschreiten darf. Dieser Laufstrom dient der Überwachung des Membranventils während der Dauer in der kein zusätzlicher Widerstand auftritt. Dadurch wird z. B. überwacht ob eine Verschmutzung die Spindel zusätzlich hemmt oder sich ein Fremdkörper im Membranventil verklemmt hat und das Betätigen der Membrane behindert, wie auch andere Zustände die auf den Antriebsstrom einen Einfluss haben überwachbar sind. Die Höhe des auftretenden Laufstroms bzw. dessen Durchschnitt unterscheidet sich bei der Inbetriebnahme des Membranventils und im Normalbetrieb. Das heisst, auch die nicht zu überschreitenden Stromwerte sind in den beiden Betriebszuständen unterschiedlich da der Laufstrom im Normalbetrieb höher ausfällt da das Membranventil durchströmende Medium einen gewissen Widerstand herstellt was einen höheren Antriebsstrom abverlangte.

Es hat sich als vorteilhaft gezeigt, wenn die Positionsverstellung der Membrane über eine Spindel erfolgt und das Anfahren der Membrane der ersten Endlageposition durch eine Spindelrotation im Uhrzeigersinn oder Gegenuhrzeigersinn erfolgt und die Verstellung der Membrane in die zweite Endlageposition bzw. in die Vorendlageposition in die entgegengesetzte Richtung bzw. Drehrichtung erfolgt.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: ein Diagramm des Antriebsstromverlaufs des Stellantriebs des Membranventils,
- Fig. 2: einen Querschnitt durch ein Membranventil mit der Membrane in der Offenstellung und
- Fig. 3: einen Querschnitt durch ein Membranventil mit der Membrane in der geschlossenen Stellung.

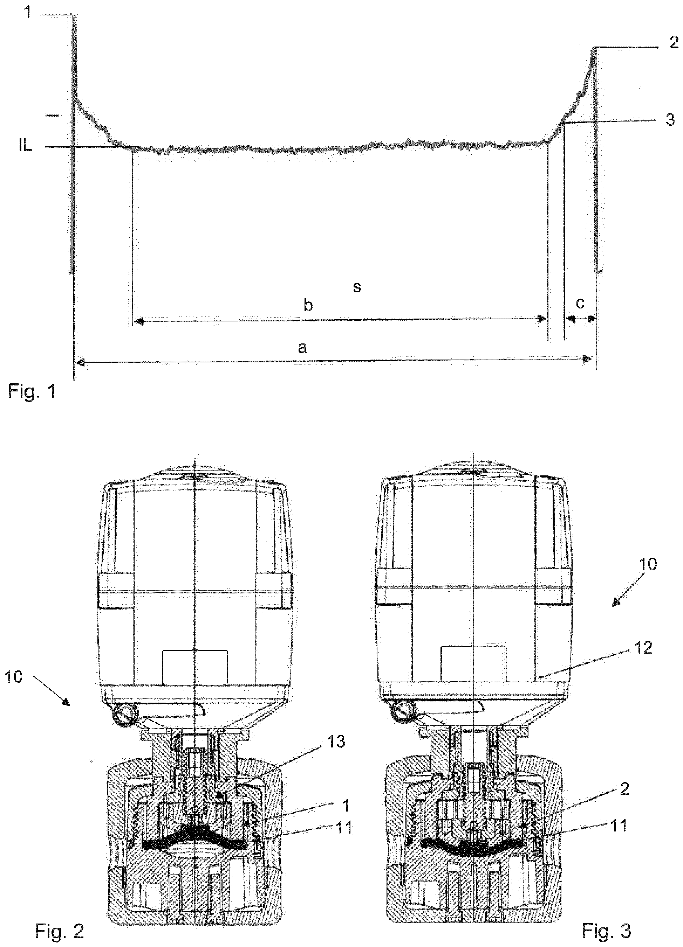

In Fig. 1 ist ein Diagramm abgebildet das den Antriebsstrom (I) zum Weg bzw. Distanz (s) über den sich die Membrane (11) im Membranventil (10) verschiebt dargestellt. Durch ein Auslösen der Membranverschiebung bzw. durch beispielsweise ein Drücken einer Auslösetaste am Stellantrieb bewegt sich die Membrane in Richtung einer ersten Endlageposition (1). Während dieses Vorgangs bzw. des gesamten erfindungsgemässen Verfahrens wird der Antriebsstrom (I) überwacht. Erreicht nun der Antriebsstrom einen bereits vordefinierten Stromwert der als Wert für die Festlegung der ersten Endlageposition vordefiniert wurde, wird diese Position als erste Endlageposition (1) festgelegt und gespeichert, vorzugsweise in der Firmware oder in einer Software einer Steuerung, wobei die erste Endlageposition (1) vorzugsweise die Offenstellung des Membranventils (10) darstellt. Zur weiteren Festlegung der zweiten Endlageposition (2) bewegt sich die Membrane autonom in die entgegengesetzte Richtung. Zur Festlegung der zweiten Endlageposition (2) bestehen zwei Varianten.

Bei der einen bewegt sich die Membrane in Richtung festzulegende zweite Endposition (2), wobei die Membrane einen vordefinierten Fahrweg (a) bzw. Distanz zugewiesen hat und somit ausgehend von der ersten Endlageposition (1) diesen vorgegebenen Fahrweg (a) abfährt und dort angekommen diesen als zweite Endlagenposition (2) abgespeichert sowie an der als zweite Endlageposition (2) festgelegte Position den Antriebsstrom ermittelt. Vorzugsweise wird dieser ermittelte Antriebsstrom an der zweiten Endlageposition (2) während des Normalbetriebs als Überprüfungswert genutzt. Damit beispielsweise wenn die Membrane die zweite Endlageposition (2) erreicht hat und der Antriebsstrom nicht mit dem gespeicherten Wert übereinstimmt eine Fehlermeldung ausgegeben wird oder ein autonomes erneutes Justieren der Membrane durchgeführt wird. Dies kann während der Inbetriebnahme oder auch während des Normalbetriebs genutzt werden

Als Variante zur Inbetriebnahme eines Membranventils (10) besteht auch die Möglichkeit zur Festlegung der zweiten Endlageposition (2) über die Überwachung des Antriebsstroms (I). Die Membrane bewegt sich nach dem Erreichen und Festlegen der ersten Endlageposition (1) in die entgegengesetzte Richtung und beim Erreichen eines vordefinierten Stromwerts der einer Vorendlageposition (3) entspricht, bei der sich bereits ein geringer Widerstand bemerkbar macht, wird noch ein vordefinierter Verstellweg (c) zugestellt, wobei der Stromwert der Vorendlageposition (3) vom System bzw. der Steuerung aus ermittelten Werten kalkuliert werden oder als fester Wert hinterleget werden kann . Durch die Zustellung des Verstellwegs (c) ausgehend der Vorendlageposition (3) wird die zweite Endlageposition (2) erreicht und gespeichert. Vorzugsweise dienen auch hier die ermittelten Antriebsstromwerte während des Normalbetriebs und der Inbetriebnahme der Überprüfung und Sicherstellung eines korrekt funktionierenden Membranventils wie auch die anderen ermittelten Antriebsstromwerte dazu genutzt werden könnten. Des Weiteren dient der Laufstrom (IL) während der Verstellung der Membrane über die Distanz bzw. der Fahrweg (s) in der kein zusätzlicher Widerstand auf die Membrane wirkt dazu, dass überprüft werden kann ob das Membranventil keine Verschmutzungen oder sonstige Fremdköper aufweist die die Verschiebung bzw. Bewegung der Membrane hemmen oder sogar blockieren würden, wobei der Laufstrom (IL) während der Inbetriebnahme und dem Normalbetrieb auf einem unterschiedlichen Niveau liegt, da im Normalbetrieb durch das Medium ein gewisser Widerstand auf die Membrane wirkt, jedoch dieser nicht als der oben erwähnte zusätzliche Widerstand zu betrachten ist, dieser bezieht sich vornehmlich auf mechanische Anschläge bzw. wenn die Membrane an der Ventilkurve oder am Anschlag ansteht.

Die Fig. 2 und 3 zeigen ein erfindungsgemässes Membranventil (10) mit einem Stellantrieb 12 wobei in Fig. 2 die Offenstellung gezeigt ist und gut ersichtlich ist, dass ein mechanischer Anschlag 13 eine weitere Öffnung verhindern bzw. die Vorherrschende limitiert. In Fig. 3 ist ein komplett geschlossenes Membranventil 10 dargestellt.

### Bezugszeichenliste

- 1: Erste Endlageposition
- 2: Zweite Endlageposition
- 3: Vorendlageposition

- 10: Membranventil
- 11: Membrane
- 12: Stellantrieb
- 13: Mechanischer Anschlag

- a: Vordefinierter Fahrweg
- b: Fahrweg ohne zusätzlichen Widerstand
- c: Verstellweg
- s: Weg
- I: Antriebsstrom
- IL: Laufstrom

## Patentansprüche

1. Verfahren zum Bestimmen der Endlagepositionen einer Membrane (11) in einem Membranventil (10) mit Antrieb:
• Auslösen der Membranverschiebung in eine erste Endlageposition (1),
• Festlegen der ersten Endlageposition (1) der Membrane, wobei die Festlegung der ersten Endlageposition (1) mittels einer Antriebsstromwertüberwachung erfolgt, wobei die erste Endlagenposition (1) beim Erreichen eines vordefinierten Stromwerts erreicht ist,
• Speichern der ersten Endlageposition (1),
• Autonomes Anfahren einer zweiten Endlageposition (2) der Membrane vorzugsweise in die entgegengesetzte Richtung,
• Festlegen der zweiten Endlageposition (2) der Membrane, wobei die Festlegung der zweiten Endlageposition (2) durch einen vordefinierten Verfahrweg (a) der Membrane ausgehend der ersten Endlageposition (1) erfolgt,
• Speichern der zweiten Endlageposition (2),
• Vorzugsweise Ermitteln des Antriebsstromwerts (I) an der zweiten Endlageposition (2) zur Überprüfung und Sicherstellung der erreichten zweiten Endlageposition (2).

2. Verfahren zum Bestimmen der Endlagepositionen einer Membrane (11) in einem Membranventil (10) mit Antrieb:
• Auslösen der Membranverschiebung in eine erste Endlageposition (1),
• Festlegen der ersten Endlageposition (1) der Membrane, wobei die Festlegung der ersten Endlageposition (1) mittels einer Antriebsstromwertüberwachung erfolgt, wobei die erste Endlagenposition (1) bei einem vordefinierten Stromwert erreicht ist,
• Speichern der ersten Endlageposition (1),
• Autonomes Anfahren einer zweiten Endlageposition (2) der Membrane vorzugsweise in die entgegengesetzte Richtung,
• Festlegen einer Vorendlageposition (3) der Membrane, wobei die Festlegung der Vorendlageposition (3) mittels einer Antriebsstromwertüberwachung erfolgt, wobei die Vorendlageposition (3) beim Erreichen eines vordefinierten Stromwert erreicht ist,
• Erreichen und Festlegen der zweiten Endlageposition (2) durch weiteres Zustellen eines vordefinierten Verstellwegs (c) der Membrane,
• Speichern der zweiten Endlageposition (2).

3. Verfahren nach Anspruch 1 oder 2, **dadurch gekennzeichnet, dass** der Antriebsstromwert (I) zum Ermitteln und Festlegen der ersten Endlageposition (1) der Membrane sich aufgrund eines mechanischen Widerstands verändert, wobei der Antriebsstromwert (I) bis zu einem vorgegebenen maximalen Stromwert ansteigt.

4. Verfahren nach einem der Ansprüche 1 bis 3, **dadurch gekennzeichnet, dass** die erste Endlageposition (1) der Membrane (11) den maximalen Öffnungszustand des Membranventils (10) definiert.

5. Verfahren nach einem der Ansprüche 1 bis 4, **dadurch gekennzeichnet, dass** die zweite Endlageposition (2) der Membrane (11) den geschlossenen Zustand des Membranventils (10) bildet.

6. Verfahren nach einem der Ansprüche 1 bis 5, **dadurch gekennzeichnet, dass** sich während des Verfahrwegs (b) der Membrane zwischen der ersten Endlageposition (1) und der zweiten Endlageposition (2) bzw. der Vorendlageposition (3) ein Laufstom (IL) einstellt, wobei der Laufstrom (b) einen vorgegeben Stromwert nicht überschreiten soll.

7. Verfahren nach einem der Ansprüche 1 bis 6, **dadurch gekennzeichnet, dass** die Positionsverstellung der Membrane (11) über eine Spindel erfolgt und das Anfahren der Membrane der ersten Endlageposition (1) durch eine Spindelrotation im Uhrzeigersinn oder Gegenuhrzeigersinn erfolgt und die Verstellung der Membrane in die zweite Endlageposition (2) bzw. in die Vorendlageposition (3) entgegengesetzt erfolgt.

## Claims

1. Method for determining the end-of-travel positions of a diaphragm (11) in a diaphragm valve (10) comprising actuator:
• initiating displacement of the diaphragm into a first end-of-travel position (1);
• ascertaining the first end-of-travel position (1) of the diaphragm, wherein said first end-of-travel position (1) is ascertained by monitoring an actuating current value, wherein the first end-of-travel position (1) is reached when a predefined current value is reached;
• saving the first end-of-travel position (1);
• moving autonomously, preferably in the opposite direction, towards a second end-of-travel position (2) of the diaphragm;
• ascertaining the second end-of-travel position (2) of the diaphragm, wherein said second end-of-travel position (2) is ascertained by means of a predefined travel length (a) of the diaphragm from the first end-of-travel position (1);
• saving the second end-of-travel position (2);
• preferably detecting the actuating current value (I) at the second end-of-travel position (2) in order to verify and ensure the reached second end-of-travel position (2).

2. Method for determining the end-of-travel positions of a diaphragm (11) in a diaphragm valve (10) comprising actuator:
• initiating displacement of the diaphragm into a first end-of-travel position (1);
• ascertaining the first end-of-travel position (1) of the diaphragm, wherein said first end-of-travel position (1) is ascertained by monitoring an actuating current value, wherein the first end-of-travel position (1) is reached at a predefined current value;
• saving the first end-of-travel position (1);
• moving autonomously, preferably in the opposite direction, towards a second end-of-travel position (2) of the diaphragm;
• ascertaining an advance end-of-travel position (3) of the diaphragm, wherein said advance end-of-travel position (3) is ascertained by monitoring an actuating current value, wherein the advance end-of-travel position (3) is reached when a predefined current value is reached;
• reaching and ascertaining the second end-of-travel position (2) by additionally completing a predefined adjustment length (c) of the diaphragm;
• saving the second end-of-travel position (2).

3. Method according to Claim 1 or 2, **characterized in that** the actuating current value (I) for detecting and ascertaining the first end-of-travel position (1) of the diaphragm changes as a result of a mechanical resistance, wherein the actuating current value (I) rises to a specified maximum current value.

4. Method according to any of Claims 1 to 3, **characterized in that** the first end-of-travel position (1) of the diaphragm (11) defines the maximum opening state of the diaphragm valve (10).

5. Method according to any of Claims 1 to 4, **characterized in that** the second end-of-travel position (2) of the diaphragm (11) constitutes the closed state of the diaphragm valve (10).

6. Method according to any of Claims 1 to 5, **characterized in that** a running current (IL) establishes itself during the travel length (b) of the diaphragm between the first end-of-travel position (1) and the second end-of-travel position (2) or respectively the advance end-of-travel position (3), wherein the running current (b) is not meant to exceed a specified current value.

7. Method according to any of Claims 1 to 6, **characterized in that** the position of the diaphragm (11) is adjusted by means of a threaded stem, and the diaphragm is moved towards the first end-of-travel position (1) by clockwise or anticlockwise rotation of the threaded stem, and the adjustment of the diaphragm into the second end-of-travel position (2) or into the advance end-of-travel position (3) is performed in the opposite direction.

## Revendications

1. Procédé pour déterminer les positions de fin de course d'une membrane (11) dans une soupape à membrane (10) comportant un entraînement, comprenant :
• le déclenchement du déplacement de la membrane à une première position de fin de course (1),
• l'établissement de la première position de fin de course (1) de la membrane, dans lequel l'établissement de la première position de fin de course (1) s'effectue au moyen d'une surveillance de la valeur du courant d'entraînement, dans lequel la première position de fin de course (1) est atteinte lorsqu'une valeur de courant prédéfinie est atteinte,
• la mémorisation de la première position de fin de course (1),
• le déplacement autonome jusqu'à une deuxième position de fin de course (2) de la membrane, de préférence dans la direction opposée,
• l'établissement de la deuxième position de fin de course (2) de la membrane, dans lequel l'établissement de la deuxième position de fin de course (2) s'effectue par une course de déplacement prédéfinie (a) de la membrane à partir de la première position de fin de course (1),
• la mémorisation de la deuxième position de fin de course (2),
• de préférence, la détermination de la valeur du courant d'entraînement (I) à la deuxième position de fin de course (2) pour vérifier et garantir la deuxième position de fin de course (2) atteinte.

2. Procédé pour déterminer les positions de fin de course d'une membrane (11) dans une soupape à membrane (10) comportant un entraînement, comprenant :
• le déclenchement du déplacement de la membrane à une première position de fin de course (1),
• l'établissement de la première position de fin de course (1) de la membrane, dans lequel l'établissement de la première position de fin de course (1) s'effectue au moyen d'une surveillance de la valeur du courant d'entraînement, dans lequel la première position de fin de course (1) est atteinte pour une valeur de courant prédéfinie,
• la mémorisation de la première position de fin de course (1),
• le déplacement autonome jusqu'à une deuxième position de fin de course (2) de la membrane, de préférence dans la direction opposée,
• l'établissement d'une position de pré-fin de course (3) de la membrane, dans lequel l'établissement de la position de pré-fin de course (3) s'effectue au moyen d'une surveillance de la valeur du courant d'entraînement, dans lequel la position de pré-fin de course (3) est atteinte lorsqu'une valeur de courant prédéfinie est atteinte,
• l'atteinte et l'établissement de la deuxième position de fin de course (2) par un autre réglage d'une course de décalage prédéfinie (c) de la membrane,
• la mémorisation de la deuxième position de fin de course (2) .

3. Procédé selon la revendication 1 ou 2, **caractérisé en ce que** la valeur du courant d'entraînement (I) destinée à déterminer et à établir la première position de fin de course (1) de la membrane varie en raison d'une résistance mécanique, dans lequel la valeur du courant d'entraînement (I) augmente jusqu'à une valeur de courant maximale prédéterminée.

4. Procédé selon l'une des revendications 1 à 3, **caractérisé en ce que** la première position de fin de course (1) de la membrane (11) définit l'état d'ouverture maximale de la soupape à membrane (10).

5. Procédé selon l'une des revendications 1 à 4, **caractérisé en ce que** la deuxième position de fin de course (2) de la membrane (11) définit l'état fermé de la soupape à membrane (10).

6. Procédé selon l'une des revendications 1 à 5, **caractérisé en ce que** pendant la course de déplacement (b) de la membrane entre la première position de fin de course (1) et la deuxième position de fin de course (2) ou la position de pré-fin de course (3), un courant de course (IL) s'établit, dans lequel le courant de course (b) ne doit pas dépasser une valeur de courant prédéterminée.

7. Procédé selon l'une des revendications 1 à 6, **caractérisé en ce que** le décalage de position de la membrane (11) s'effectue par l'intermédiaire d'une broche et que le déplacement de la membrane vers la première position de fin de course (1) s'effectue par une rotation de la broche dans le sens des aiguilles d'une montre ou dans le sens contraire des aiguilles d'une montre et que le décalage de la membrane à la deuxième position de fin de course (2) ou à la position de pré-fin de course (3) s'effectue en sens inverse.
